(19) Europäisches Patentamt
European Patent Office
Office européen des brevets

(11) **EP 4 610 809 A1**

(12) **EUROPEAN PATENT APPLICATION**
published in accordance with Art. 153(4) EPC

(43) Date of publication:
**03.09.2025   Bulletin 2025/36**

(21) Application number: **23887556.1**

(22) Date of filing: **08.08.2023**

(51) International Patent Classification (IPC):
**G06F 8/41** *(2018.01)*

(52) Cooperative Patent Classification (CPC):
**G06F 8/41**

(86) International application number:
**PCT/CN2023/111703**

(87) International publication number:
**WO 2024/098860 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022   RU 2022129231**

(71) Applicant: **Huawei Cloud Computing
Technologies Co., Ltd.
Guiyang, Guizhou 550025 (CN)**

(72) Inventors:
• **WANG, Yawei**
  **Guiyang, Guizhou 550025 (CN)**
• **PETROCHENKO, Pavel**
  **Guiyang, Guizhou 550025 (CN)**
• **LUKIANOVA, Olga**
  **Guiyang, Guizhou 550025 (CN)**
• **DENISENKO, Denis**
  **Guiyang, Guizhou 550025 (CN)**
• **SELEZNEV, Ilya**
  **Guiyang, Guizhou 550025 (CN)**

(74) Representative: **Grünecker Patent- und
Rechtsanwälte
PartG mbB
Leopoldstraße 4
80802 München (DE)**

(54) **SYNTAX TREE RECOVERY METHOD AND RELATED DEVICE**

(57)   Embodiments of this application provide a syntax tree recovery method and a related apparatus. The method includes: obtaining a first abstract syntax tree corresponding to a first code text; obtaining a second code text based on an edit operation set of a user for the first code text, where a second abstract syntax tree corresponding to the second code text includes a first error, and the edit operation set includes N edit operations; determining at least one recovery operation based on a trained abstract syntax tree recovery model, the first abstract syntax tree, and the edit operation set; and modifying the first error in the second abstract syntax tree based on the at least one recovery operation, to obtain a third syntax tree. **In** the foregoing technical solution, an abstract syntax tree in which an error occurs may be recovered at low costs by using the trained abstract syntax tree recovery model and a user operation.

```
┌─────────────────────────────────────────┐
│ Obtain a first abstract syntax tree      │ 101
│ corresponding to a first code text       │
└─────────────────────────────────────────┘
                    │
┌─────────────────────────────────────────┐
│ Obtain a second code text based on an    │ 102
│ edit operation set of a user for the     │
│ first code text                          │
└─────────────────────────────────────────┘
                    │
┌─────────────────────────────────────────┐
│ Determine at least one recovery operation│ 103
│ based on a trained abstract syntax tree  │
│ recovery model, the first abstract syntax│
│ tree, and the edit operation set         │
└─────────────────────────────────────────┘
                    │
┌─────────────────────────────────────────┐
│ Modify a first error in a second abstract│ 104
│ syntax tree based on the at least one    │
│ recovery operation, to obtain a third    │
│ syntax tree                              │
└─────────────────────────────────────────┘
```

FIG. 1

EP 4 610 809 A1

## Description

This application claims priority to Russian Patent Application No. 2022129231, filed with the Federal Service for Intellectual Property of the Russian Federation on November 10, 2022 and entitled "SYNTAX TREE RECOVERY METHOD AND RELATED APPARATUS", which is incorporated herein by reference in its entirety.

## TECHNICAL FIELD

Embodiments of this application relate to the field of information technologies, and more specifically, to a syntax tree recovery method and a related apparatus.

## BACKGROUND

Abstract syntax tree (abstract syntax tree, AST) is a tree representation of an abstract syntax structure of source code. Each node in the tree represents a structure in the source code. The AST has a wide range of functions, for example, may be used in code syntax check, code highlighting, code error prompt, automatic code completion, code structure change, code conversion, and the like. However, in an encoding process, real-time modification by a user often causes an incorrect code intermediate state. Consequently, a code parsing error occurs, and a correct AST of a program cannot be obtained, resulting in temporary invalidation of various characteristics. A capability to continue parsing after a syntax error occurs and finally create an AST as close as possible to an initial intention of the user is an urgent key requirement to be met currently.

## SUMMARY

Embodiments of this application provide a syntax tree recovery method and a related apparatus, to recover a syntax tree in which an error occurs.

According to a first aspect, an embodiment of this application provides a syntax tree recovery method, including: obtaining a first abstract syntax tree corresponding to a first code text; obtaining a second code text based on an edit operation set of a user for the first code text, where a second abstract syntax tree corresponding to the second code text includes a first error, the edit operation set includes N edit operations, and N is a positive integer greater than or equal to 1; determining at least one recovery operation based on a trained abstract syntax tree recovery model, the first abstract syntax tree, and the edit operation set; and modifying the first error in the second abstract syntax tree based on the at least one recovery operation, to obtain a third syntax tree.

In the foregoing technical solution, an abstract syntax tree including an error may be recovered to a correct abstract syntax tree. In this way, operations such as code syntax check, code highlighting, code error prompt, automatic code completion, code structure change, and code conversion may be performed based on the recovered correct syntax tree. In addition, the abstract syntax tree may be recovered at low costs by using the trained abstract syntax tree recovery model and an operation of the user.

With reference to the first aspect, in a possible implementation of the first aspect, the determining at least one recovery operation based on a trained abstract syntax tree recovery model, the first abstract syntax tree, and the edit operation set includes: determining, based on the first abstract syntax tree, M pieces of context information related to the edit operation set, where M is a positive integer greater than or equal to 1; and inputting the M pieces of context information and N pieces of edit operation information into the trained abstract syntax tree recovery model, to obtain the at least one recovery operation, where the N pieces of edit operation information are in one-to-one correspondence with the N edit operations.

With reference to the first aspect, in a possible implementation of the first aspect, the determining, based on the first abstract syntax tree, M pieces of context information related to the edit operation set includes: determining, based on the first abstract syntax tree, M ancestor nodes of a node corresponding to the edit operation set; and determining that type information of the M ancestor nodes is the M pieces of context information.

With reference to the first aspect, in a possible implementation of the first aspect, the trained abstract syntax tree recovery model is obtained by adjusting a parameter of an abstract syntax recovery model with a target that a value of a loss function is less than a preset threshold. The loss function is used to represent a difference between a predicted abstract syntax tree and an expected abstract syntax tree. The predicted abstract syntax tree is obtained by recovering, based on the recovery operation determined based on the abstract syntax tree recovery model, an intermediate abstract syntax tree including at least one error. The expected abstract syntax tree is a syntax tree that corresponds to the intermediate abstract syntax tree and that includes no error.

With reference to the first aspect, in a possible implementation of the first aspect, the loss function is a tree edit distance between the predicted abstract syntax tree and the expected abstract syntax tree.

With reference to the first aspect, in a possible implementation of the first aspect, the trained abstract syntax tree recovery model is a finite state machine, and the finite state machine is stored in a form of a dictionary tree.

A recovery operation for rectifying an error may be found in very short time by using the abstract syntax tree recovery model stored in the form of the dictionary tree. In this way, user experience may be improved, and the user may modify, in a timely manner, code in which an error occurs.

With reference to the first aspect, in a possible implementation of the first aspect, the inputting the M pieces of context information and N pieces of edit operation information into the trained abstract syntax tree recovery model, to obtain the at least one recovery operation includes: determining K nodes from the dictionary tree based on the M pieces of context information and the N pieces of edit operation information, where the K nodes include M first nodes, N second nodes, and at least one third node, the K nodes further include a first separator and a second separator, and the K nodes are respectively located at K layers of the dictionary tree, where the M first nodes are in one-to-one correspondence with the M pieces of context information, the N second nodes are in one-to-one correspondence with the N pieces of edit operation information, the M first nodes are ancestor nodes of the first separator, the first separator is an ancestor node of the N second nodes, the N second nodes are ancestor nodes of the second separator, and the second separator is an ancestor node of the at least one third node; and determining the at least one recovery operation based on the at least one third node, where the at least one third node is in one-to-one correspondence with the at least one recovery operation, and each third node in the at least one third node includes type information of a corresponding recovery operation.

According to a second aspect, an embodiment of this application provides a computer device. The computer device includes units configured to implement any one of the first aspect or the possible implementations of the first aspect.

According to a third aspect, an embodiment of this application provides a computer device. The computer device includes a processor. The processor is configured to: be coupled to a memory, and read and execute instructions and/or program code in the memory, to perform the first aspect or any one of the possible implementations of the first aspect.

According to a fourth aspect, an embodiment of this application provides a chip system. The chip system includes a logic circuit, and the logic circuit is configured to: be coupled to an input/output interface, and perform transmission of data through the input/output interface, to perform the first aspect or any one of the possible implementations of the first aspect.

According to a fifth aspect, an embodiment of this application provides a computer-readable storage medium. The computer-readable storage medium stores program code. When the computer storage medium is run on a computer, the computer is enabled to perform the first aspect or any one of the possible implementations of the first aspect.

According to a sixth aspect, an embodiment of this application provides a computer program product. The computer program product includes computer program code. When the computer program code is run on a computer, the computer is enabled to perform the first aspect or any one of the possible implementations of the first aspect.

## BRIEF DESCRIPTION OF DRAWINGS

FIG. 1 is a schematic flowchart of a syntax tree recovery method according to an embodiment of this application;
FIG. 2 is a diagram of a system architecture according to an embodiment of this application;
FIG. 3 is a diagram of tree conversion;
FIG. 4 is a diagram of tree conversion corresponding to a code snippet f = a + b;
FIG. 5 shows a result obtained by converting a finite state machine in Table 1 into a dictionary tree;
FIG. 6 is a diagram of a dictionary tree;
FIG. 7 is a diagram of a dictionary tree;
FIG. 8 is a diagram of a dictionary tree; and
FIG. 9 is a diagram of a dictionary tree.

## DESCRIPTION OF EMBODIMENTS

The following describes technical solutions in embodiments of this application with reference to accompanying drawings.

Terms used in the following embodiments are merely intended to describe specific embodiments, but are not intended to limit this application. The terms "one", "a", and "this" of singular forms used in this specification and the appended claims of this application are intended to include a form like "one or more", unless otherwise specified in the context clearly. It should be further understood that, in the following embodiments of this application, "at least one" and "one or more" mean one, two, or more. "First", "second", and various numbers are merely intended for distinguishing for ease of description, and are not intended to limit the scope of embodiments of this application. "And/or" describes a correspondence between objects that correspond to each other, and indicates that three relationships may exist. For example, "A and/or B" may indicate the following three cases: Only A exists, only B exists, and both A and B exist, where A and B may be singular or plural. The character "/" generally indicates an "or" relationship between the associated objects. Sequence numbers of the following processes do not mean an execution sequence. The execution sequence of the processes should be determined based on functions and internal logic of the processes, and should not constitute any limitation on an implementation process of embodiments of this application. For example, in embodiments of this application, the terms "301", "401", "501", and the like are merely identifiers for ease of description, and are not intended to limit an execution sequence of steps.

Reference to "an embodiment", "some embodiments", or the like described in this specification indicates that one or more embodiments of this application include a specific feature, structure, or characteristic described with reference to the embodiment. In this application, the term "example", "for example", or the like is used to give an example, an illustration, or a description. Any embodiment or design scheme described as an "example" or "for example" in this application should not be explained as being more preferred or having more advantages than another embodiment or design scheme. To be precise, use of the term "example", "for example", or the like is intended to present a relative concept in a specific manner. The terms "include", "have", and their variants all mean "include but are not limited to", unless otherwise specifically emphasized in another manner. In embodiments of this application, descriptions such as "when...", "in a case of...", and "if" all mean that a device performs corresponding processing in an objective case, and are not limited to time, and the device is not required to perform a determining action during implementation. This does not mean that there is another limitation.

In this application, "indicate" may include "directly indicate" and "indirectly indicate". When a piece of indication information indicates A, the indication information may directly indicate A or indirectly indicate A, but it does not indicate that the indication information definitely carries A. In embodiments of this application, descriptions such as "when... ", "in a case of...", and "if" all mean that a device performs corresponding processing in an objective case, and are not limited to time, and the device is not required to perform a determining action during implementation. This does not mean that there is another limitation.

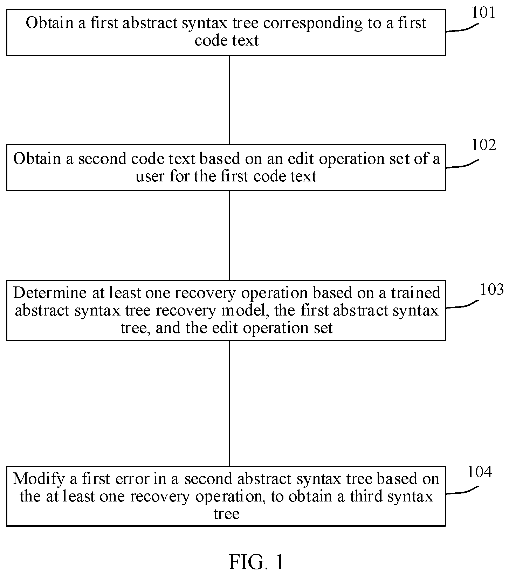

FIG. 1 is a schematic flowchart of a syntax tree recovery method according to an embodiment of this application. The method shown in FIG. 1 may be performed by a computer device or a component (for example, a chip or a system on a chip) in the computer device.

101: Obtain a first abstract syntax tree corresponding to a first code text.

102: Obtain a second code text based on an edit operation set of a user for the first code text, where a second abstract syntax tree corresponding to the second code text includes a first error. The edit operation set includes N edit operations, and N is a positive integer greater than or equal to 1.

103: Determine at least one recovery operation based on a trained abstract syntax tree recovery model, the first abstract syntax tree, and the edit operation set.

104: Modify the first error in the second abstract syntax tree based on the at least one recovery operation, to obtain a third syntax tree.

The trained abstract syntax tree recovery model in the foregoing embodiment may be deployed on a computer device side. In this way, the computer device may quickly rectify, directly based on code and an edit operation that are entered by the user, an error in an abstract syntax tree by using the trained abstract syntax tree recovery model, to obtain a correct syntax tree. The computer device may perform a subsequent operation based on the correct syntax tree, for example, may perform operations such as code modification and highlighting based on the correct syntax tree.

In some embodiments, the determining at least one recovery operation based on a trained abstract syntax tree recovery model, the first abstract syntax tree, and the edit operation set includes: determining, based on the first abstract syntax tree, M pieces of context information related to the edit operation set, where M is a positive integer greater than or equal to 1; and inputting the M pieces of context information and N pieces of edit operation information into the trained abstract syntax tree recovery model, to obtain the at least one recovery operation, where the N pieces of edit operation information are in one-to-one correspondence with the N edit operations.

In some embodiments, the determining, based on the first abstract syntax tree, M pieces of context information related to the edit operation set includes: determining, based on the first abstract syntax tree, M ancestor nodes of a node corresponding to the edit operation set; and determining that type information of the M ancestor nodes is the M pieces of context information.

Optionally, in some embodiments, the inputting the M pieces of context information and N pieces of edit operation information into the trained abstract syntax tree recovery model, to obtain the at least one recovery operation includes: determining K nodes from a dictionary tree based on the M pieces of context information and the N pieces of edit operation information, where the K nodes include M first nodes, N second nodes, and at least one third node, the K nodes further include a first separator and a second separator, and the K nodes are respectively located at K layers of the dictionary tree, where the M first nodes are in one-to-one correspondence with the M pieces of context information, the N second nodes are in one-to-one correspondence with the N pieces of edit operation information, the M first nodes are ancestor nodes of the first separator, the first separator is an ancestor node of the N second nodes, the N second nodes are ancestor nodes of the second separator, and the second separator is an ancestor node of the at least one third node; and determining the at least one recovery operation based on the at least one third node, where the at least one third node is in one-to-one correspondence with the at least one recovery operation, and each third node in the at least one third node includes type information of a corresponding recovery operation.

In some embodiments, a value of M is less than or equal to a preset threshold. For example, the preset threshold may be equal to 3, 4, 5, or the like. It is assumed that a node corresponding to an edit operation is at an $X^{th}$ layer of an AST. If X is an integer greater than or equal to 3, the M ancestor nodes are ancestor nodes that are of the node corresponding to the edit operation and that are located at an $(X-1)^{th}$ layer, an $(X-2)^{th}$ layer, and an $(X-3)^{th}$ layer. For example, if the node corresponding to the edit operation is located at a $6^{th}$ layer, nodes that are of the node and that are located at a $5^{th}$ layer, a $4^{th}$ layer, and a $3^{rd}$ layer are the M ancestor nodes. If X is less than M, the M ancestor nodes are all ancestor nodes of the node corresponding to the edit operation.

A training process of an abstract syntax tree recovery model may be implemented by the computer device, or the abstract syntax tree recovery model may be deployed in the computer device after being trained by another computer device.

Optionally, in some embodiments, the trained abstract syntax tree recovery model is obtained by adjusting a parameter of the abstract syntax recovery model with a target that a value of a loss function is less than a preset threshold. The loss function is used to represent a difference between a predicted abstract syntax tree and an expected abstract syntax tree. The predicted abstract syntax tree is obtained by recovering, based on the recovery operation determined based on the abstract syntax tree recovery model, an intermediate abstract syntax tree including at least one error. The expected abstract syntax tree is a syntax tree that corresponds to the intermediate abstract syntax tree and that includes no error.

Optionally, in some embodiments, the loss function is a tree edit distance between the predicted abstract syntax tree and the expected abstract syntax tree.

Optionally, in some embodiments, the trained abstract syntax tree recovery model is a finite state machine, and the finite state machine is stored in a form of a dictionary tree.

Optionally, in some other embodiments, the trained abstract syntax tree may be a knowledge graph or a vector graph.

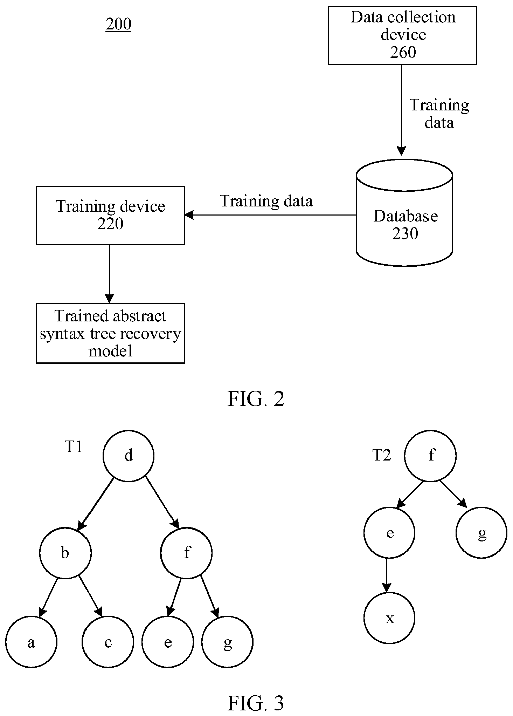

FIG. 2 is a diagram of a system architecture according to an embodiment of this application. In a system 200 shown in FIG. 2, a data collection device 260 is configured to collect training data and store the training data in a database 230. A training device 220 trains an abstract syntax tree recovery model based on the training data maintained in the database 230, to obtain a trained abstract syntax tree recovery model.

The abstract syntax tree recovery model may be a neural network model. For ease of understanding, the following first describes related concepts of a neural network.

1. Neural network

The neural network may include a neuron. The neuron may be an operation unit that uses $x_s$ and an intercept of 1 as inputs. An output of the operation unit may be as follows:

$$h_{W,b}(x) = f\left(W^T x\right) = f(\sum_{s=1}^{n} W_s x_s + b) \quad \text{(Formula 1)}$$

s = 1, 2, ..., or n, n is a natural number greater than 1, $W_s$ is a weight of $x_S$, and b is an offset of the neuron. f is an activation function (activation function) of the neuron, and is used to introduce a non-linear characteristic into the neural network, to convert an input signal in the neuron into an output signal. The output signal of the activation function may serve as an input of a next convolutional layer. The activation function may be a sigmoid function. The neural network is a network including many single neurons connected together. To be specific, an output of one neuron may be an input of another neuron. An input of each neuron may be connected to a local receptive field of a previous layer, to extract a feature of the local receptive field. The local receptive field may be a region including several neurons.

2. Deep neural network

The deep neural network (deep neural network, DNN), also referred to as a multi-layer neural network, may be understood as a neural network with many hidden layers. There is no special measurement standard for "many" herein. The DNN is divided based on locations of different layers, and a neural network in the DNN may be divided into three types: an input layer, a hidden layer, and an output layer. Generally, a $1^{st}$ layer is the input layer, a last layer is the output layer, and intermediate layers are all hidden layers. Layers are fully connected. To be specific, any neuron at an $i^{th}$ layer is definitely connected to any neuron at an $(i+1)^{th}$ layer. Although the DNN seems complex, it is not complex in terms of work at each layer. Simply speaking, the DNN is the following linear relationship expression: $\vec{y}=\alpha(W\vec{x}+\vec{b})$, where $\vec{x}$ is an input vector, $\vec{y}$ is an output vector, $\vec{b}$ is an offset vector, W is a weight matrix (also referred to as a coefficient), and $\alpha()$ is an activation function.

At each layer, the output vector $\vec{y}$ is obtained by performing such a simple operation on the input vector $\vec{x}$. Because there are many layers in the DNN, there are also many coefficients W and offset vectors $\vec{b}$. Definitions of these parameters in the DNN are as follows: The coefficient W is used as an example. It is assumed that in a DNN with three layers, a linear coefficient from a 4th neuron at a 2nd layer to a 2nd neuron at a 3rd layer is defined as $W_{24}^{3}$. The superscript 3 represents a layer at which the coefficient W is located, and the subscript corresponds to an output 3rd-layer index 2 and an input 2nd-layer index 4. In conclusion, a coefficient from a kth neuron at an (L-1)th layer to a jth neuron at an Lth layer is defined as $W_{jk}^{L}$. It should be noted that there is no parameter W for the input layer. In the deep neural network, more hidden layers enable the network to be more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of a trained deep neural network (a weight matrix including vectors W at many layers).

3. Convolutional neural network

The convolutional neural network (convolutional neural network, CNN) is a deep neural network with a convolutional structure. The convolutional neural network includes a feature extractor including a convolutional layer and a sub-sampling layer. The feature extractor may be considered as a filter. A convolution process may be considered as performing convolution by using a trainable filter and an input image or a convolutional feature map (feature map). The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature maps, and each feature map may include some neurons that are in a rectangular arrangement. Neurons in a same feature map share a weight, and the weight shared herein is a convolutional kernel. Weight sharing may be understood as that an image information extraction manner is irrelevant to a location. A principle implied herein is that statistical information of a part of an image is the same as that of other parts. This means that image information learned in a part can also be used in another part. Therefore, the same image information obtained through learning can be used for all locations on the image. At a same convolutional layer, a plurality of convolutional kernels may be used to extract different image information. Generally, a larger quantity of convolutional kernels indicates richer image information reflected in a convolution operation.
The convolutional kernel may be initialized in a form of a matrix with a random size. In a training process of the convolutional neural network, the convolutional kernel may obtain an appropriate weight through learning. In addition, benefits directly brought by the weight sharing are that connections between layers of the convolutional neural network are reduced, and an overfitting risk is reduced.

4. Loss function

In the process of training the deep neural network, because it is expected that an output of the deep neural network is as close as possible to a predicted value that is actually expected, a predicted value of a current network and a target value that is actually expected may be compared, and then a weight vector of each layer of the neural network is updated based on a difference between the predicted value and the target value (certainly, there is usually an initialization process before a 1st update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to compare the predicted value with the target value to obtain the difference" needs to be predefined. This leads to a loss function (loss function) or an objective function (objective function). The loss function and the objective function are important equations for measuring the difference between the predicted value and the target value. The loss function is used as an example. A larger output value (loss) of the loss function indicates a larger difference. Therefore, the training of the deep neural network is a process of minimizing the loss as much as possible.

5. Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to enable the error loss to converge. The back propagation algorithm is an error-loss-centered back propagation motion intended to obtain a parameter, like a weight matrix, of an optimal super-resolution model.

The following describes a training dataset and a loss function that are used for training the abstract syntax tree recovery model.

The training dataset includes a plurality of pieces of training data, and each of the plurality of pieces of training data includes the following content: {AST 1, recovery operation, AST 1'}. AST 1 is an abstract syntax tree obtained by adding, based on AST 0, one or more operations that cause an error in an incorrect abstract syntax tree. In other words, AST 0 is a correct syntax tree, AST 1 is an abstract syntax tree obtained by editing code corresponding to AST 0, and AST 1 includes at least one error. AST 1' is a correct abstract syntax tree. AST 1' is obtained by recovering AST 1 by using the recovery operation.

As described above, the loss function in this embodiment of this application may be a tree edit distance (tree edit distance, TED). The TED represents a minimum operation cost (cost) needed for converting one tree into another tree.

To convert one tree into another tree, one or more of a delete operation, an add operation, or a replace operation generally need to be performed. The delete operation refers to deleting a node from the tree. The add operation refers to adding a node to the tree. The replace operation refers to replacing content of a node in the tree.

In some embodiments, an operation cost of the replace operation may be less than an operation cost of the delete operation, and the operation cost of the delete operation may be equal to an operation cost of the add operation. For example, the operation cost of the replace operation is 2, and the operation costs of the delete operation and the add operation are 3.

For example, FIG. 3 shows a conversion instance of a tree. As shown in FIG. 3, to convert a tree 1 (denoted as T1) into a tree 2 (denoted as T2), nodes c, e, and g need to be deleted, a node f needs to be replaced with a node g, a node d needs to be replaced with a node f, a node b needs to be replaced with a node e, and a node a needs to be replaced with a node x. Therefore, to convert T1 into T2, a total of three delete operations and four replace operations are needed. In this case, a tree edit distance corresponding to the conversion is: $TED(T1, T2) = 3 \times 3 + 4 \times 2 = 17$.

In some other embodiments, an operation cost of the replace operation may be less than an operation cost of the delete operation, and the operation cost of the delete operation may be less than an operation cost of the add operation. For example, the operation cost of the replace operation is 2, the operation cost of the delete operation is 3, and the operation cost of the add operation is 4.

In some embodiments, the operation cost is further related to a level (level) at which a node is located. A cost of an operation closer to a root node (at a lower level) is higher.

For example, in some embodiments, for a node, an operation cost of the node meets the following relationship: operation cost = basic operation/level, where the basic operation refers to the delete operation, the replace operation, and the add operation, and the level is a level at which a phase in which the basic operation is performed is located.

It is still assumed that the operation cost of the replace operation is 2, and the operation costs of the delete operation and the add operation are 3. If a level of the node x is 1, and an operation on the node x is a replace operation, an operation cost of the node x is 2. If a level of the node y is 4, and an operation on the node y is also a replace operation, an operation cost of the node y is 0.5.

In some embodiments, the operation cost is further related to a hyperparameter of a language of code. For example, in some embodiments, for a node, an operation cost of the node meets the following relationship: operation cost = basic operation/$n_c$, where $n_c$ is a hyperparameter of a language. Generally, the hyperparameter is a number greater than 1.

In some other embodiments, the operation cost is related to a hyperparameter and a level. For example, in some embodiments, for a node, an operation cost of the node meets the following relationship: operation cost = basic operation/(level $\times$ $n_c$), where the level is a level at which the node is located, and $n_c$ is a hyperparameter.

A loss parameter may be determined by using test data. The test data may be one piece of training data in a training dataset, or may be data different from the training data. The test data may include an intermediate abstract syntax tree and an expected abstract syntax tree. The intermediate abstract syntax tree includes at least one error, and the expected syntax tree is a correct abstract syntax tree corresponding to the intermediate abstract syntax tree. In other words, if the error of the intermediate abstract syntax tree can be correctly rectified, an obtained syntax tree is the expected syntax tree. After the intermediate abstract syntax tree is input into an abstract syntax tree recovery model, a recovery operation may be obtained, and a predicted abstract syntax tree may be obtained by recovering the intermediate abstract syntax tree by using the recovery operation. The loss function is from the predicted abstract syntax tree to the expected abstract syntax tree. If the predicted abstract syntax tree is denoted as $AST_P$ and the expected abstract syntax tree is denoted as $AST_E$, the loss function may be represented as $TED(AST_P, AST_E)$.

It can be learned from a definition of the TED that a smaller value of $TED(AST_P, AST_E)$ indicates that a syntax tree recovered by using the abstract syntax tree recovery model is closer to the correct abstract syntax tree. Therefore, when training is performed on the abstract syntax tree recovery model, if a value of the loss function converges to be less than a preset minimum loss function threshold, it may be considered that the training of the abstract syntax tree recovery model is completed. In some embodiments, the minimum loss function threshold may be a number less than 3 and greater than 0, for example, may be 2, 1, or 0.5.

As described above, in some embodiments, a trained abstract syntax tree recovery model may be stored in a computer device in a form of a finite state machine converted into a dictionary tree. The following separately describes the finite state machine and the dictionary tree.

It is assumed that AST 0 is used to represent a correct abstract syntax tree, Actions is used to represent an operation performed on AST 0, and AST 1 is used to represent an abstract syntax tree obtained by performing an operation on AST 0, where AST 1 includes at least one error. A maximum of N most possible AST 0+Actions combinations are sampled. Each AST 0+Actions combination is input into the trained abstract syntax tree recovery model, and the trained abstract syntax tree recovery model infers a corresponding recovery operation (denoted as RecoveryActions). An original context (namely, AST 0), an operation (namely, Actions), an error context (namely, AST 1), and a recovery operation (RecoveryActions) are recorded in the finite state machine.

A code snippet f = a + b is used as an example.

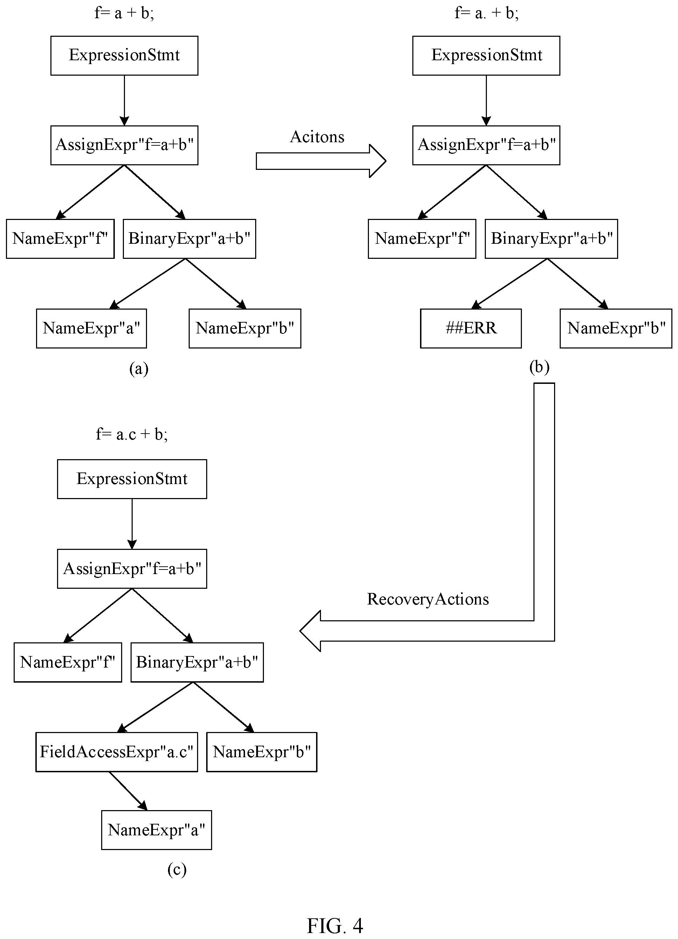

FIG. 4 is a diagram of tree conversion corresponding to a code snippet f = a + b.

(a) in FIG. 4 corresponds to an AST of the code snippet f = a + b. This AST is a correct AST, and may be referred to as AST 0.

It is assumed that an operation is entering a symbol "." after the identifier "a". In this case, AST 0 is converted into AST 1 shown in (b) in FIG. 4. This AST 1 is an abstract syntax tree including an error. After AST 0 and the symbol "." that is inserted by using the operation are input into a trained abstract syntax tree recovery model, a recovery operation may be obtained. The recovery operation is inserting an identifier. It is assumed that the inserted identifier is an identifier "c". In this way, an abstract syntax tree shown in (c) in FIG. 4 may be obtained. In the abstract syntax tree shown in (c) in FIG. 4, the error in the abstract syntax tree AST 1 shown in (b) in FIG. 4 is rectified. Therefore, the abstract syntax tree shown in (c) in FIG. 4 may be referred to as AST 1'.

A process from AST 0 to AST 1 to AST 1' shown in FIG. 4 is represented as a finite state machine, and the finite state machine may be shown in Table 1.

Table 1

| AST 0 | Actions | AST 1 | RecoveryActions | AST 1' |
|---|---|---|---|---|
| <NameExpr>< BinaryExpr> <AssignExpr> | <INT><Dot> | <##ERR><Bina ryExpr> <AssignExpr> | <INS><Identifier> | <Name><FieldAcc essExpr><BinaryE xpr><AssignExpr> |

As shown in Table 1, an initial state is AST 0. A state changes from AST 0 to AST 1 after Actions. The state changes from AST 1 to AST 1' after RecoveryActions. A context of original code, Actions, RecoveryActions, and AST 1 stored in the finite state machine shown in Table 1 may store only node type information. In this way, when the recovery operation is determined, only the recovery operation and a node type need to be predicted, and a value does not need to be predicted.

Table 2 shows common node type information.

Table 2

| Type information | Description |
|---|---|
| <NameExpr> | Name expression |
| <BinaryExpr> | Binary expression |
| <AssignExpr> | Assignment expression |
| <FieldAccessExpr> | Field access expression |
| <Name> | Name |
| <ClassOrInterfDecl> | Class or interface declaration |
| <MethodDecl> | Method declaration |
| <BlockStmt> | Block statement |
| <VariableDecl> | Variable declaration |
| <Modifier> | Modifier |

(continued)

| Type information | Description |
|---|---|
| <StringLiteralExpr> | Character literal declaration |
| <MethodCallExpr> | Method return expression |

There are three types of common operations performed by a user on code: insertion, deletion, and modification, which may be represented as <INS>, <DEL>, and <REP> respectively. In an AST, node type information included in a node corresponding to a user operation may include: operation type+content. For example, if the user operation is inserting an identifier, the type information included in the node corresponding to the operation is <INS><Identifier>. For another example, if the user operation is inserting a space, the type information included in the node corresponding to the operation is <INS><Space>. In some embodiments, if the user operation is a replace operation, a data object may include replace content related to the replace operation. For example, if the replace operation of the user is replacing a lowercase letter p in public with an uppercase letter P, the type information included in the corresponding phase is <REP><Public>.

Table 3 shows operation content of a scenario.

Table 3

| Content | Description |
|---|---|
| <Identifier> | Identifier |
| <DOT> | Symbol "." |
| <Space> | Space |
| <Quote> | Symbol " " " |
| <Backslash> | Symbol "/" |
| <Int> | Integer |
| <Plus> | Symbol "+" |
| <Left-Paren> | Symbol "(" |
| <Right-Paren> | Symbol ")" |
| <New> | Using a keyword New |

It may be understood that a representation manner of the type information shown in Table 2 and a representation manner of the operation content shown in Table 3 are merely intended to help a person skilled in the art better understand the technical solutions of this application, but are not intended to limit the representation manners of the type information and the operation content. For example, the method declaration may alternatively be represented as MethodDeclaration, MthDecl, MD, or the like.

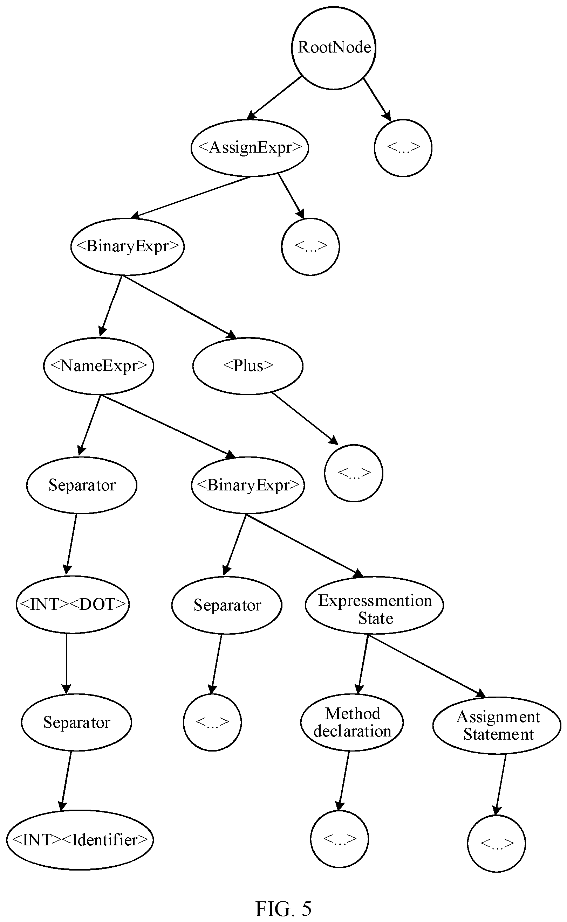

FIG. 5 shows a result obtained by converting the finite state machine in Table 1 into a dictionary tree.

As shown in FIG. 5, each node in AST 0, Actions, and RecoveryActions in Table 1 corresponds to one node in the dictionary tree shown in FIG. 5. For ease of differentiation, in the dictionary tree, a node corresponding to AST 0 may be referred to as a first node, a node corresponding to Actions is referred to as a second node, and a node corresponding to RecoveryActions is referred to as a third node. As shown in Table 1, there are three nodes in total in AST 0: <NameExpr>, <BinaryExpr>, and <AssignExpr>. Correspondingly, three first nodes are included in the dictionary tree shown in FIG. 5, and the three first nodes are in one-to-one correspondence with the three nodes in AST 0. As shown in Table 1, there is one node <INS><DOT> in total in Actions. Therefore, the dictionary tree shown in FIG. 5 has only one second node, and the second node corresponds to the node in Actions in Table 1. RecoveryActions shown in Table 1 also has only one node. Therefore, the dictionary tree shown in FIG. 5 also has only one third node, and the third node corresponds to the node in RecoveryActions in Table 1.

To distinguish between the first node and the second node, one separator (separator) may be inserted between the first node and the second node in the dictionary tree, and the separator may be referred to as a first separator. Similarly, to distinguish between the second node and the third node, one separator (separator) may also be inserted between the second node and the third node in the dictionary tree, and the separator may be referred to as a second separator.

It may be understood that a plurality of finite state machines may be obtained by using a trained abstract syntax tree recovery model, and each finite state machine may be converted into a dictionary tree. Finally, a dictionary tree including all the finite state machines may be obtained.

The following describes the technical solutions of this application with reference to specific embodiments.

It is assumed that a code text entered by a user is the following code text 1.0.

Code text 1.0:

| 0 | public class Test { |
|---|---|
| 1 | class A { |
| 2 | void foo (String p) { |
| 3 | |
| 4 | } |
| 5 | } |
| 6 | } |

An AST corresponding to the code text 1.0 includes no syntax error. Therefore, the AST of the code text 1.0 may be referred to as AST 0, where AST 0 = <BlockStmt>/<MethodDecl>/<ClassOrInterfDecl>

It is assumed that the user inserts an identifier "S" at line 3 of the code text 1.0. A text obtained by inserting the identifier by the user is the following code text 1.1.

Code text 1.1:

| 0 | public class Test { |
|---|---|
| 1 | class A { |
| 2 | void foo (String p) { |
| 3 | S |
| 4 | } |
| 5 | } |
| 6 | } |

A mark operation entered by the user may be represented as: Actions = <INS><Identifier>.

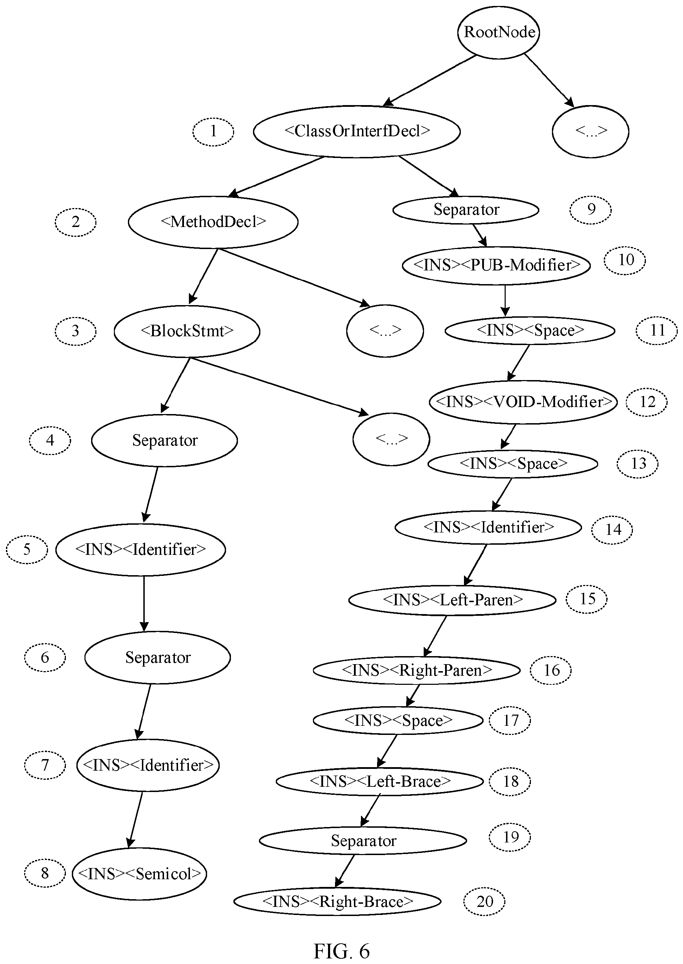

According to a dictionary tree shown in FIG. 6, it may be determined that a node 1 to a node 3 are three first nodes, a node 5 is a second node, a node 4 is a first separator, and a node 6 is a second separator. Therefore, descendant nodes of the node 6 (namely, a node 7 and a node 8) correspond to RecoveryActions. The RecoveryActions is RecoveryActions corresponding to the foregoing AST 0 and Actions, that is, RecoveryActions = <INS><Identifier><INS><Semicol>. According to the RecoveryActions, it may be determined that an identifier and a symbol ";" need to be inserted. Assuming that the inserted identifier is s, an obtained code text is the following code text 1.2.

Code text 1.2

| 0 | public class Test { |
|---|---|
| 1 | class A { |
| 2 | void foo (String p) { |
| 3 | S s; |
| 4 | } |
| 5 | } |
| 6 | } |

It is assumed that a code text entered by a user is the following code text 2.0.

Code text 2.0:

| 0 | public class Test { |
|---|---|

(continued)

| | |
|---|---|
| 1 | |
| 2 | } |

An AST corresponding to the code text 2.0 includes no syntax error. Therefore, the AST of the code text 2.0 may be referred to as AST 0, where AST 0 = <ClassOrInterfDecl>.

It is assumed that a code text 2.1 is a text obtained by performing an operation on the code text 2.0 by the user.

Code text 2.1:

| | |
|---|---|
| 0 | public class Test { |
| 1 | public void foo () { |
| 2 | public static void main (String [] args) { |
| 3 | |
| 4 | } |
| 5 | } |

A mark operation entered by the user may be represented as Actions = <INS><PUB-Modifier><INS><Space><INS><VOID-Modifier><INS><Space><INS><Identifier><INS><Left-Paren><INS><Right-Paren><INS><Space><INS><Left-Brace>.

According to a dictionary tree shown in FIG. 6, it may be determined that a node 1 is a first node, a node 10 to a node 18 are second nodes, a node 9 is a first separator, and a node 19 is a second separator. Therefore, a descendant node of the node 19 (namely, a node 20) corresponds to RecoveryActions. The RecoveryActions is RecoveryActions corresponding to the foregoing AST 0 and Actions, that is, RecoveryActions = <INS><Right-Brace>. According to the RecoveryActions, it may be determined that a symbol "}" needs to be inserted. Therefore, an obtained code text is the following code text 2.2.

Code text 2.2:

| | |
|---|---|
| 0 | public class Test { |
| 1 | public void foo () {} |
| 2 | public static void main (String [] args) { |
| 3 | |
| 4 | } |
| 5 | } |
| It is assumed that a code text entered by a user is the following code text 3.0. Code text 3.0: | |
| 0 | public class Test { |
| 1 | public void foo () { |
| 2 | HashMap<String > map=new HashMap<>() |
| 3 | } |
| 2 | } |

An AST corresponding to the code text 3.0 includes no syntax error. Therefore, the AST of the code text 3.0 may be referred to as AST 0, where AST 0 = <ClassOrInterfDecl>/<ClassOrInterfDecl>/<VariableDecl>/<ExpressionStmt>.

Assuming that the user inserts an identifier "H" after String at line 2 of the code text 3.0, a code text obtained by performing the insert operation by the user may be represented as the following code text 3.1.

Code text 3.1:

| | |
|---|---|
| 0 | public class Test { |

(continued)

| | |
|---|---|
| 1 | public void foo () { |
| 2 | HashMap<String H> map=new HashMap<>() |
| 3 | } |
| 2 | } |

Therefore, a mark operation entered by the user may be represented as: Actions = <INS><Identifier>.

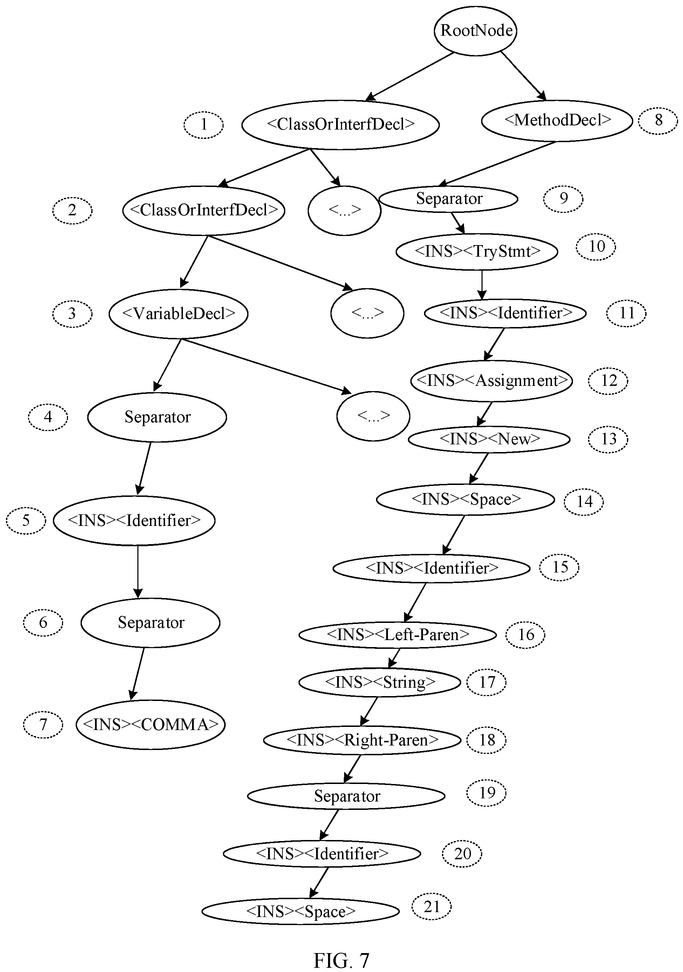

According to a dictionary tree shown in FIG. 7, it may be determined that a node 1 to a node 3 are three first nodes, a node 5 is a second node, a node 4 is a first separator, and a node 6 is a second separator. Therefore, a descendant node of the node 6 (namely, a node 7) corresponds to RecoveryActions. The RecoveryActions is RecoveryActions corresponding to the foregoing AST 0 and Actions, that is, RecoveryActions = <INS><COMMA>. According to the RecoveryActions, it may be determined that a symbol "," needs to be inserted. In this case, the following code text 3.2 may be obtained.

Code text 3.2

| | |
|---|---|
| 0 | public class Test { |
| 1 | public void foo () { |
| 2 | HashMap<String, H> map=new HashMap<>() |
| 3 | } |
| 4 | } |

It is assumed that a code text entered by a user is the following code text 4.0.

Code text 4.0:

| | |
|---|---|
| 0 | public void foo () { |
| 1 | |
| 2 | } |

An AST corresponding to the code text 4.0 includes no syntax error. Therefore, the AST of the code text 4.0 may be referred to as AST 0, where AST 0 = <MethodDeclaration>.

It is assumed that a code text 4.1 is a text obtained by performing an operation on the code text 4.0 by the user.

Code text 4.1:

| | |
|---|---|
| 0 | public void foo () { |
| 1 | try(a=new FileOutputStream("aa")) { |
| 2 | |
| 3 | } |

A mark operation entered by the user may be represented as Actions = <INS><TryStmt><INS><Identifier><INS><Assignment><INS><New><INS><Space><INS><Identifier><INS><Left-Paren><INS><String><INS><Right-Paren>.

According to a dictionary tree shown in FIG. 7, it may be determined that a node 8 is a first node, a node 10 to a node 18 are second nodes, a node 9 is a first separator, and a node 19 is a second separator. Therefore, descendant nodes of the node 19 (namely, a node 20 and a node 21) correspond to RecoveryActions. The RecoveryActions is RecoveryActions corresponding to the foregoing AST 0 and Actions, that is, RecoveryActions = <INS><Identifier><INS><Space>. According to the RecoveryActions, it may be determined that an identifier and a space need to be inserted. Assuming that the inserted identifier is A, the following code text 4.2 may be obtained.

Code text 4.2

| 0 | public void foo () { |
|---|---|
| 1 | try(A a=new FileOutputStream("aa")) { |
| 2 | |
| 3 | } |

It is assumed that a code text entered by a user is the following code text 5.0.

Code text 5.0:

| 0 | void foo(String p) { |
|---|---|
| 1 | int a = 1; |
| 2 | int b = 2; |
| 3 | int c = a + b; |
| 4 | } |

An AST corresponding to the code text 5.0 includes no syntax error. Therefore, the AST of the code text 5.0 may be referred to as AST 0, where AST 0 = <NameExpr>/<BinaryExpr>/<VariableDecl>.

Assuming that the user inserts a symbol "." after a at line 3 of the code text 5.0, a code text obtained by performing the insert operation by the user may be represented as the following code text 5.1.

Code text 5.1:

| 0 | void foo(String p) { |
|---|---|
| 1 | int a = 1; |
| 2 | int b = 2; |
| 3 | int c = a. + b; |
| 4 | } |

A mark operation entered by the user may be represented as: Actions = <INS><Dot>.

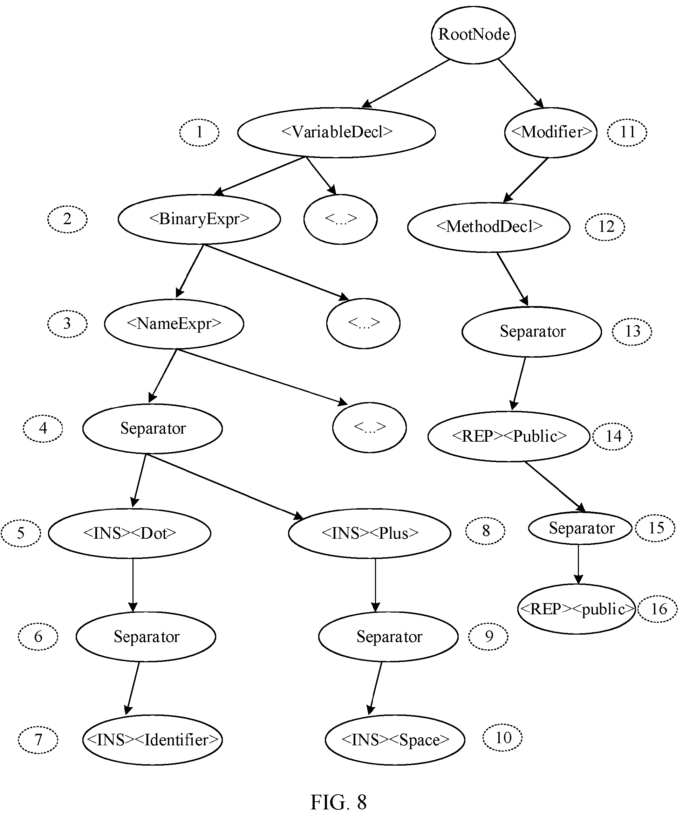

According to a dictionary tree shown in FIG. 8, it may be determined that a node 1 to a node 3 are three first nodes, a node 5 is a second node, a node 4 is a first separator, and a node 6 is a second separator. Therefore, a descendant node of the node 6 (namely, a node 7) corresponds to RecoveryActions. The RecoveryActions is RecoveryActions corresponding to the foregoing AST 0 and Actions, that is, RecoveryActions = <INS><Identifier>. According to the RecoveryActions, it may be determined that an identifier needs to be inserted. It is assumed that the inserted identifier is "X". In this case, the following code text 5.2 may be obtained.

Code text 5.2

| | 0 void foo(String p) { |
|---|---|
| 1 | int a = 1; |
| 2 | int b = 2; |
| 3 | int c = a.X + b; |
| 4 | } |

It is assumed that a code text entered by a user is the following code text 6.0.

Code text 6.0:

| 0 | public void foo(String P) { |
|---|---|
| 1 | int a = 1; |

(continued)

| | |
|---|---|
| 2 | int b = -2; |
| 3 | int c = a + b; |
| 4 | } |

An AST corresponding to the code text 6.0 includes no syntax error. Therefore, the AST of the code text 6.0 may be referred to as AST 0, where AST 0 = <NameExpr>/<BinaryExpr>/<VariableDecl>.

Assuming that the user inserts a symbol "+" after a symbol "+" at line 3 of the code text 6.0, a code text obtained by performing the insert operation by the user may be represented as the following code text 6.1.

Code text 6.1

| | |
|---|---|
| 0 | public void foo(String P) { |
| 1 | int a = 1; |
| 2 | int b = -2; |
| 3 | int c = a ++ b; |
| 4 | } |

A mark operation entered by the user may be represented as: Actions = <INS><Plus>.

According to a dictionary tree shown in FIG. 8, it may be determined that a node 1 to a node 3 are three first nodes, a node 8 is a second node, a node 4 is a first separator, and a node 9 is a second separator. Therefore, a descendant node of the node 6 (namely, a node 10) corresponds to RecoveryActions. The RecoveryActions is RecoveryActions corresponding to the foregoing AST 0 and Actions, that is, RecoveryActions = <INS><Space>. According to the RecoveryActions, it may be determined that a space needs to be inserted. In this case, the following code text 6.2 may be obtained.

Code text 6.2

| | |
|---|---|
| 0 | public void foo(String P) { |
| 1 | int a = 1; |
| 2 | int b = -2; |
| 3 | int c = a + + b; |
| 4 | } |

It is assumed that a code text entered by a user is the following code text 7.0.

Code text 7.0:

| | |
|---|---|
| 0 | public static void main (String [] args) { |
| 1 | |
| 2 | } |

An AST corresponding to the code text 7.0 includes no syntax error. Therefore, the AST of the code text 7.0 may be referred to as AST 0, where AST 0 = <Modifier><MethodDeclaration>.

It is assumed that the user changes a letter p in public at line 0 of the code text 7.0 to uppercase. Correspondingly, a code text obtained by performing the operation may be represented as the following code text 7.1.

Code text 7.1

| | |
|---|---|
| 0 | Public static void main (String [] args) { |
| 1 | |
| 2 | } |

A mark operation entered by the user may be represented as: Actions = <REP><Public>.

According to a dictionary tree shown in FIG. 8, it may be determined that a node 11 and a node 12 are two first nodes, a node 14 is a second node, a node 13 is a first separator, and a node 15 is a second separator. Therefore, a descendant node of the node 15 (namely, a node 16) corresponds to RecoveryActions. The RecoveryActions is RecoveryActions corresponding to the foregoing AST 0 and Actions, that is, RecoveryActions = <REP><public>. According to the RecoveryActions, it may be determined that Public needs to be replaced with public. In this case, the following code text may be obtained.

| | |
|---|---|
| 0 | public static void main (String [] args) { |
| 1 | |
| 2 | } |

It is assumed that a code text entered by a user is the following code text 8.0.

Code text 8.0:

| | |
|---|---|
| 0 | public static void main (String [] args) { |
| 1 | System.out.println("Justin said, hello world"); |
| 2 | } |

An AST corresponding to the code text 8.0 includes no syntax error. Therefore, the AST of the code text 8.0 may be referred to as AST 0, where AST 0 = <StringLiteralExpr>/<MethodCallExpr>.

It is assumed that an operation 1 of the user is inserting a double quotation mark on the left of hello, and an operation 2 of the user is inserting double quotation marks on both the left and right of hello. Code corresponding to the operation 1 and the operation 2 is the following code text 8.1 and code text 8.2.

Code text 8.1

| | |
|---|---|
| 0 | Public static void main (String [] args) { |
| 1 | System.out.println("Justin said, "hello world"); |
| 2 | } |

Code text 8.2

| | |
|---|---|
| 0 | public static void main (String [] args) { |
| 1 | System.out.println("Justin said, "hello world""); |
| 2 | } |

For Actions corresponding to the operation 1 and the operation 2, Actions = <INS><Quote>.

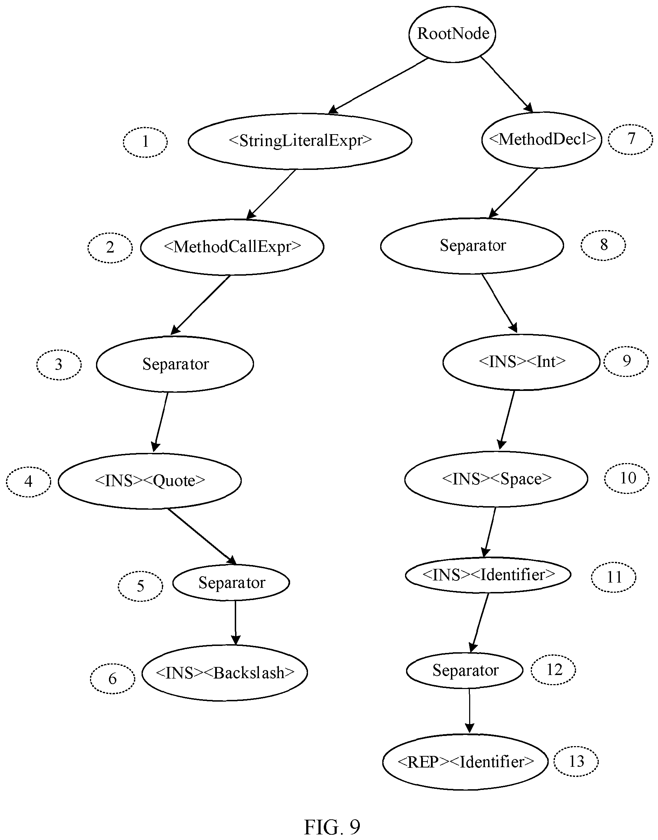

According to a dictionary tree shown in FIG. 9, it may be determined that a node 1 and a node 2 are two first nodes, a node 4 is a second node, a node 3 is a first separator, and a node 5 is a second separator. Therefore, a descendant node of the node 5 (namely, a node 6) corresponds to RecoveryActions. The RecoveryActions is RecoveryActions corresponding to the foregoing AST 0 and Actions, that is, RecoveryActions = <INS><Backslash>. According to the RecoveryActions, it may be determined that a symbol "/" needs to be inserted. In this case, the following code text 8.3 and code text 8.4 may be obtained, where the code text 8.3 is a recovery of the operation 1 and the code text 8.4 is a recovery of the operation 2.

Code text 8.3

| | |
|---|---|
| 0 | Public static void main (String [] args) { |
| 1 | System.out.println("Justin said, \"hello world"); |
| 2 | } |

Code text 8.4

| | |
|---|---|
| 0 | public static void main (String [] args) { |
| 1 | System.out.println("Justin said, \"hello world"\"); |

(continued)

| Code text 8.4 | |
|---|---|
| 2 | } |

It is assumed that a code text entered by a user is the following code text 9.0.

Code text 9.0:

| 0 | public static void main (String [] args) { |
|---|---|
| 1 | |
| 2 | } |

An AST corresponding to the code text 9.0 includes no syntax error. Therefore, the AST of the code text 9.0 may be referred to as AST 0, where AST 0 = <MethodDecl>.

It is assumed that the user inserts int %aa at line 2 of the code text 9.0. Then, a code text obtained by performing the insertion is the following code text 9.1.

Code text 9.1

| 0 | public static void main (String [] args) { |
|---|---|
| 1 | int %aa; |
| 2 | } |

A mark operation entered by the user may be represented as Actions = <INS><Int><INS><Space><INS><Identifier>.

According to a dictionary tree shown in FIG. 9, it may be determined that a node 7 is three first nodes, a node 9 to a node 11 are three second nodes, a node 8 is a first separator, and a node 12 is a second separator. Therefore, a descendant node of the node 12 (namely, a node 13) corresponds to RecoveryActions. The RecoveryActions is RecoveryActions corresponding to the foregoing AST 0 and Actions, that is, RecoveryActions = <REP><Identifier>. According to the RecoveryActions, it may be determined that an identifier "aa" needs to be replaced. Assuming that an identifier after the replacement is "x", the following code text 9.2 may be obtained.

Code text 9.2

| 0 | public static void main (String [] args) { |
|---|---|

| 1 | int x; |
|---|---|
| 2 | } |

In some embodiments, a trained abstract syntax tree recovery model may be a dictionary tree. For example, if FIG. 5 to FIG. 9 are a trained abstract syntax tree recovery model, the dictionary trees shown in FIG. 5 to FIG. 9 are different parts of a dictionary tree.

In some other embodiments, a trained abstract syntax tree recovery model may alternatively be a plurality of dictionary trees. Different dictionary trees correspond to different first nodes in AST 0. For example, a dictionary tree 1 corresponds to a node <VariableDecl>, and a dictionary tree 2 corresponds to a node <ClassOrInterfDecl>. For example, if a 1st node of AST 0 of a code text is <ClassOrInterfDecl>, a node matching the code text may be determined from the dictionary tree 2, and in this case, the dictionary tree 1 does not need to be traversed. Similarly, if a 1st node of AST 0 corresponding to a code text is <VariableDecl>, a node matching the code text may be determined from the dictionary tree 1, and in this case, the dictionary tree 2 does not need to be traversed.

An embodiment of this application provides a computer device. The computer device includes an obtaining unit and a processing unit.

The obtaining unit is configured to obtain a first abstract syntax tree corresponding to a first code text.

The processing unit is configured to obtain a second code text based on an edit operation set of a user for the first

16

code text, where a second abstract syntax tree corresponding to the second code text includes a first error, the edit operation set includes N edit operations, and N is a positive integer greater than or equal to 1.

The processing unit is further configured to determine at least one recovery operation based on a trained abstract syntax tree recovery model, the first abstract syntax tree, and the edit operation set.

The processing unit is further configured to modify the first error in the second abstract syntax tree based on the at least one recovery operation, to obtain a third syntax tree.

For specific functions and beneficial effects of the obtaining unit and the processing unit, refer to descriptions in the foregoing embodiments. For brevity, details are not described herein again.

The obtaining unit and the processing unit may be implemented by a processor.

An embodiment of this application further provides a computer device, including a processor and a memory. The processor is configured to: be coupled to the memory, and read and execute instructions and/or program code in the memory, to perform the steps in the foregoing method embodiments.

It should be understood that the processor may be a chip. For example, the processor may be a field programmable gate array (field programmable gate array, FPGA), an application-specific integrated circuit (application-specific integrated circuit, ASIC), a graphics processing unit (graphics processing unit, GPU), a system on a chip (system on a chip, SoC), a central processing unit (central processing unit, CPU), a network processor (network processor, NP), a digital signal processor (digital signal processor, DSP), a micro controller (micro controller unit, MCU), a programmable controller (programmable logic device, PLD), another programmable logic device, a discrete gate or a transistor logic device, a discrete hardware component, or another integrated chip.

In an implementation process, the steps in the foregoing method may be implemented by using a hardware integrated logical circuit in the processor, or by using instructions in a form of software. The steps in the method disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logical circuit in the processor, or by using instructions in a form of software. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not for limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the system and method described in this specification includes but is not limited to these and any memory of another appropriate type.

According to the method provided in embodiments of this application, this application further provides a computer program product. The computer program product includes computer program code, and when the computer program code is run on a computer, the computer is enabled to perform the steps in the foregoing embodiments.

According to the method provided in embodiments of this application, this application further provides a computer-readable medium. The computer-readable medium stores program code, and when the program code is run on a computer, the computer is enabled to perform the steps in the foregoing embodiments.

According to the method provided in embodiments of this application, an embodiment of this application provides a chip system. The chip system includes a logic circuit. The logic circuit is configured to: be coupled to an input/output interface, and perform transmission of data through the input/output interface, to perform the steps in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A syntax tree recovery method, comprising:

   obtaining a first abstract syntax tree corresponding to a first code text;
   obtaining a second code text based on an edit operation set of a user for the first code text, wherein a second abstract syntax tree corresponding to the second code text comprises a first error, the edit operation set comprises N edit operations, and N is a positive integer greater than or equal to 1;
   determining at least one recovery operation based on a trained abstract syntax tree recovery model, the first abstract syntax tree, and the edit operation set; and
   modifying the first error in the second abstract syntax tree based on the at least one recovery operation, to obtain a third syntax tree.

2. The method according to claim 1, wherein the determining at least one recovery operation based on a trained abstract syntax tree recovery model, the first abstract syntax tree, and the edit operation set comprises:

   determining, based on the first abstract syntax tree, M pieces of context information related to the edit operation set, wherein M is a positive integer greater than or equal to 1; and

inputting the M pieces of context information and N pieces of edit operation information into the trained abstract syntax tree recovery model, to obtain the at least one recovery operation, wherein the N pieces of edit operation information are in one-to-one correspondence with the N edit operations.

3. The method according to claim 2, wherein the determining, based on the first abstract syntax tree, M pieces of context information related to the edit operation set comprises:

determining, based on the first abstract syntax tree, M ancestor nodes of a node corresponding to the edit operation set; and

determining that type information of the M ancestor nodes is the M pieces of context information.

4. The method according to any one of claims 1 to 3, wherein the trained abstract syntax tree recovery model is obtained by adjusting a parameter of an abstract syntax recovery model with a target that a value of a loss function is less than a preset threshold, wherein

the loss function is used to represent a difference between a predicted abstract syntax tree and an expected abstract syntax tree, wherein

the predicted abstract syntax tree is obtained by recovering, based on the recovery operation determined based on the abstract syntax tree recovery model, an intermediate abstract syntax tree comprising at least one error; and

the expected abstract syntax tree is a syntax tree that corresponds to the intermediate abstract syntax tree and that comprises no error.

5. The method according to claim 4, wherein the loss function is a tree edit distance between the predicted abstract syntax tree and the expected abstract syntax tree.

6. The method according to any one of claims 1 to 5, wherein the trained abstract syntax tree recovery model is a finite state machine, and the finite state machine is stored in a form of a dictionary tree.

7. The method according to claim 6, wherein the inputting the M pieces of context information and N pieces of edit operation information into the trained abstract syntax tree recovery model, to obtain the at least one recovery operation comprises:

determining K nodes from the dictionary tree based on the M pieces of context information and the N pieces of edit operation information, wherein the K nodes comprise M first nodes, N second nodes, and at least one third node, the K nodes further comprise a first separator and a second separator, and the K nodes are respectively located at K layers of the dictionary tree, wherein the M first nodes are in one-to-one correspondence with the M pieces of context information, the N second nodes are in one-to-one correspondence with the N pieces of edit operation information, the M first nodes are ancestor nodes of the first separator, the first separator is an ancestor node of the N second nodes, the N second nodes are ancestor nodes of the second separator, and the second separator is an ancestor node of the at least one third node; and

determining the at least one recovery operation based on the at least one third node, wherein the at least one third node is in one-to-one correspondence with the at least one recovery operation, and each third node in the at least one third node comprises type information of a corresponding recovery operation.

8. A computer device, comprising:

an obtaining unit, configured to obtain a first abstract syntax tree corresponding to a first code text; and

a processing unit, configured to obtain a second code text based on an edit operation set of a user for the first code text, wherein a second abstract syntax tree corresponding to the second code text comprises a first error, the edit operation set comprises N edit operations, and N is a positive integer greater than or equal to 1, wherein

the processing unit is further configured to determine at least one recovery operation based on a trained abstract syntax tree recovery model, the first abstract syntax tree, and the edit operation set; and

the processing unit is further configured to modify the first error in the second abstract syntax tree based on the at least one recovery operation, to obtain a third syntax tree.

9. The computer device according to claim 8, wherein the processing unit is specifically configured to:

determine, based on the first abstract syntax tree, M pieces of context information related to the edit operation set, wherein M is a positive integer greater than or equal to 1; and

input the M pieces of context information and N pieces of edit operation information into the trained abstract syntax tree recovery model, to obtain the at least one recovery operation, wherein the N pieces of edit operation information are in one-to-one correspondence with the N edit operations.

10. The computer device according to claim 9, wherein the processing unit is specifically configured to:

determine, based on the first abstract syntax tree, M ancestor nodes of a node corresponding to the edit operation set; and

determine that type information of the M ancestor nodes is the M pieces of context information.

11. The computer device according to any one of claims 8 to 10, wherein the trained abstract syntax tree recovery model is obtained by adjusting a parameter of an abstract syntax recovery model with a target that a value of a loss function is less than a preset threshold, wherein

the loss function is used to represent a difference between a predicted abstract syntax tree and an expected abstract syntax tree, wherein

the predicted abstract syntax tree is obtained by recovering, based on the recovery operation determined based on the abstract syntax tree recovery model, an intermediate abstract syntax tree comprising at least one error; and

the expected abstract syntax tree is a syntax tree that corresponds to the intermediate abstract syntax tree and that comprises no error.

12. The computer device according to claim 11, wherein the loss function is a tree edit distance between the predicted abstract syntax tree and the expected abstract syntax tree.

13. The computer device according to any one of claims 8 to 11, wherein the trained abstract syntax tree recovery model is a finite state machine, and the finite state machine is stored in a form of a dictionary tree.

14. The computer device according to claim 13, wherein the processing unit is specifically configured to:

determine K nodes from the dictionary tree based on the M pieces of context information and the N pieces of edit operation information, wherein the K nodes comprise M first nodes, N second nodes, and at least one third node, the K nodes further comprise a first separator and a second separator, and the K nodes are respectively located at K layers of the dictionary tree, wherein the M first nodes are in one-to-one correspondence with the M pieces of context information, the N second nodes are in one-to-one correspondence with the N pieces of edit operation information, the M first nodes are ancestor nodes of the first separator, the first separator is an ancestor node of the N second nodes, the N second nodes are ancestor nodes of the second separator, and the second separator is an ancestor node of the at least one third node; and

determine the at least one recovery operation based on the at least one third node, wherein the at least one third node is in one-to-one correspondence with the at least one recovery operation, and each third node in the at least one third node comprises type information of a corresponding recovery operation.

15. A computer device, comprising a processor, wherein the processor is configured to: be coupled to a memory, and read and execute instructions and/or program code in the memory, to perform the method according to any one of claims 1 to 7.

16. A chip system, comprising a logic circuit, wherein the logic circuit is configured to: be coupled to an input/output interface, and perform transmission of data through the input/output interface, to perform the method according to any one of claims 1 to 7.

17. A computer-readable medium, wherein the computer-readable medium stores program code, and when the computer program code is run on a computer, the computer is enabled to perform the method according to any one of claims 1 to 7.

Obtain a first abstract syntax tree corresponding to a first code text     101

Obtain a second code text based on an edit operation set of a user for the first code text     102

Determine at least one recovery operation based on a trained abstract syntax tree recovery model, the first abstract syntax tree, and the edit operation set     103

Modify a first error in a second abstract syntax tree based on the at least one recovery operation, to obtain a third syntax tree     104

FIG. 1

200

Data collection
device
260

Training
data

Training device
220

← Training data ←

Database
230

Trained abstract
syntax tree recovery
model

FIG. 2

T1

d

b          f

a    c    e    g

T2

f

e          g

x

FIG. 3

f= a + b;

```
ExpressionStmt

AssignExpr"f=a+b"

NameExpr"f"   BinaryExpr"a+b"

NameExpr"a"        NameExpr"b"
```

(a)

Acitons →

f= a. + b;

```
ExpressionStmt

AssignExpr"f=a+b"

NameExpr"f"   BinaryExpr"a+b"

##ERR          NameExpr"b"
```

(b)

f= a.c + b;

```
ExpressionStmt

AssignExpr"f=a+b"

NameExpr"f"   BinaryExpr"a+b"

FieldAccessExpr"a.c"   NameExpr"b"

NameExpr"a"
```

(c)

RecoveryActions

FIG. 4

FIG. 5

FIG. 6

FIG. 7

FIG. 8

FIG. 9

## INTERNATIONAL SEARCH REPORT

| International application No. |
| --- |
| **PCT/CN2023/111703** |

| A. | CLASSIFICATION OF SUBJECT MATTER |
| --- | --- |

G06F8/41(2018.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, CNABS, DWPI, USTXT, WOTXT, EPTXT, CNKI, Google: 抽象语法树, 缺陷, 修复, 字典树, 代码, 编辑, 路径, 训练, 模型, AST, defect, repair, dictionary tree, code, edit, operation, path, train, model

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WANG, ShangWen et al. "BEEP:Fine-grained fix localization by learning to predict buggy code elements" <br> *Aralia IV, [online], [search date: 21 October 2023 ]. [search on the Internet]: URL:https://doi.org/10.48550/arXiv.2111.07739*, 15 November 2021 (2021-11-15), <br> pages 1-15 | 1-6, 8-13, 15-17 |
| X | MESBAH, A. et al. "DeepDelta:Learning to repair compilation errors" <br> *Proceedings of the 2019 27th ACM Joint Eurpean Software Engineering Conference and Symposium on the Fundations of Software Engineering*, 26 August 2019 (2019-08-26), <br> pages 925-934 | 1-6, 8-13, 15-17 |
| A | CN 108932192 A (NANJING UNIVERSITY) 04 December 2018 (2018-12-04) <br> entire document | 1-17 |
| A | US 2017212829 A1 (AMERICAN SOFTWARE SAFETY RELIABILITY COMPANY) 27 July 2017 (2017-07-27) <br> entire document | 1-17 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 October 2023** | **28 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/111703**

| Patent document cited in search report | | | Publication date (day/month/year) | Patent family member(s) | | | Publication date (day/month/year) |
|---|---|---|---|---|---|---|---|
| CN | 108932192 | A | 04 December 2018 | CN | 108932192 | B | 14 January 2020 |
| US | 2017212829 | A1 | 27 July 2017 | None | | | |

Form PCT/ISA/210 (patent family annex) (July 2022)

REFERENCES CITED IN THE DESCRIPTION

**Patent documents cited in the description**

• RU 2022129231